## Europäisches Patentamt
## European Patent Office
## Office européen des brevets

(19)

(11) Veröffentlichungsnummer: **0 011 229**
**B1**

(12)

# EUROPÄISCHE PATENTSCHRIFT

(45) Veröffentlichungstag der Patentschrift:
**01.04.81**

(51) Int. Cl.³: **G 03 B 23/04**

(21) Anmeldenummer: **79104359.9**

(22) Anmeldetag: **07.11.79**

(54) **Diaprojektor und hierfür geeignete Diamagazine.**

(30) Priorität: **14.11.78 DE 2849362**

(43) Veröffentlichungstag der Anmeldung:
**28.05.80 Patentblatt 80/11**

(45) Bekanntmachung des Hinweises auf die Patenterteilung:
**01.04.81 Patentblatt 81/13**

(84) Benannte Vertragsstaaten:
**BE FR GB IT**

(56) Entgegenhaltungen:
**DE-A-1 808 753**
**DE-A-2 038 441**
**DE-B-1 547 190**
**DE-B2-1 907 311**
**DE-B2-2 035 688**
**DE-B2-2 147 173**
**US-A-2 969 711**
**US-A-3 139 691**

(73) Patentinhaber: **AGFA-GEVAERT Aktiengesellschaft,
Camera-Werk Patent- und Lizenzwesen Postfach,
D-8000 München 90 (DE)**

(72) Erfinder: **Grünbacher, Martin, Burgsolmser Weg 19,
D-6333 Braunfels (DE)**

## Diaprojektor und hierfür geeignete Diamagazine

Die Erfindung betrifft einen Diaprojektor für in Magazinen angeordnete, gerahmte Diapositive mit einem motorischen oder von Hand betätigbaren Diawechselschieber, mit einer Diaeinführöffnung und interner Vorrichtung zum schrittweisen Weitertransport eines eingesetzten Diamagazins nach der Zurückführung eines projizierten Dias in das Magazin und mit einer in einem oben offenen Schacht angeordneten Magazinführungsbahn für einen ersten Magazintyp und einem Keil in dieser Magazinführungsbahn zum Anheben der in Magazinen dieses Typs angeordneten Diapositive auf die Höhe der Vorführebene des Projektors und Absenkung derselben auf die Magazinbodenleisten nach der Vorführung und mit Mitteln zur Verwendung eines zweiten Magazintyps, in dem die Diapositive mit geringeren Abständen voneinander angeordnet sind als im ersten Magazintyp.

Es wurden schon ein Diaprojektor und hierfür geeignete unterschiedliche Diamagazine vorgeschlagen, wobei zwei auf einer Welle angeordnete Zahnräder gleicher Zähnezahl, aber unterschiedlichen Durchmessers vorgesehen wurden, von denen je eines zum schrittweisen Transport eines Magazins eines bestimmten Magazintyps um jeweils ein Diafach bestimmt war. Bei dieser vorgeschlagenen Projektor-Magazin-Kombination mussten die Magazine von hinten parallel zur optischen Achse des Projektionsobjektes in die Magazinführungsbahn eingeschoben und vorn wieder herausgezogen werden und es war nicht absolut sichergestellt, dass unterschiedliche Magazine jeweils nur in die für sie vorgesehene Magazinführungsbahn eingesetzt werden konnten.

Der Erfindung liegt nun die Aufgabe zugrunde, bei einem Projektor der eingangs genannten Art die Magazinführungsbahnen für die unterschiedlichen Diamagazine so anzuordnen, dass alle Magazintypen auch von oben in den Projektor einsetzbar bzw. aus diesem entnehmbar sind und ausserdem Magazine eines Typs nur in die für sie bestimmte Magazinführungsbahn gelangen.

Diese Aufgabe wird erfindungsgemäss durch die Merkmale des Hauptanspruchs gelöst. Weitere vorteilhafte Ausgestaltungen nach der Erfindung sind den Unteransprüchen entnehmbar.

Die Erfindung wird anhand von Zeichnungen näher erläutert. Es zeigen

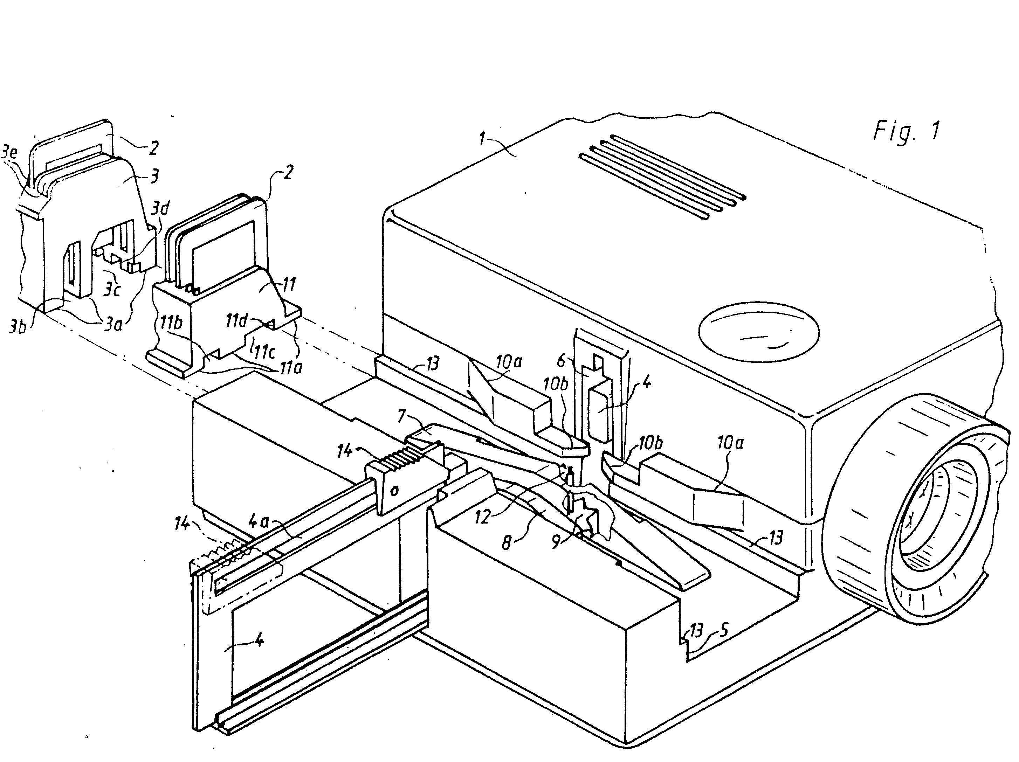

Fig. 1 eine perspektivische Darstellung eines erfindungsgemässen Stehbildprojektors und zugehöriger Diamagazine.

Fig. 2 und 3 Ansichten des Projektors nach Fig. 1 von hinten, teilweise aufgebrochen, bei Verwendung von zwei unterschiedlichen Diamagazinen,

Fig. 4 und 5 eine Draufsicht auf den Projektor nach Fig. 1, teilweise aufgebrochen, bei Verwendung der zwei unterschiedlichen Diamagazine gemäss den Fig. 2 und 3.

In den Figuren ist mit 1 ein Stehbildprojektor beziffert, der zur Vorführung von gerahmten Diapositiven 2, welche in einem bekannten sog. Einheitsmagazin 1 angeordnet sind, ausgestattet ist.

Dieser bekannte Magazintyp 3 weist drei Bodenleisten 3a auf, die durch eine breite und eine schmale Ausnehmung 3b, 3c voneinander getrennt sind. Dabei ist an der äusseren Bodenleiste, die die breite Ausnehmung 3c begrenzt, eine Zahnstange 3d vorgesehen. Die im Einheitsmagazin 3 befindlichen Dias 2 liegen auf den Bodenleisten 3a auf und sind durch Fachwände 3e voneinander getrennt. Die Höhe der Fachwände 3e ist erheblich kleiner als die Höhe der Diarahmen 2, so dass die Diarahmen 2 durch eine von Hand oder motorisch zu betätigenden projektorseitigen Diawechselschieber 4 oberhalb der Fachwände 3e erfasst und an der Magazinseite, an der die Fächer offen sind, in den Belichtungsstrahlengang des Projektors 1 und zurück ins Magazin 3 bewegt werden können.

Der Projektor 1 weist eine Führungsbahn 5 auf, die schachtartig ausgebildet ist und etwa die Breite des Magazintyps 3 hat. Am Boden der Führungsbahn 5 sind zwei zur Diaeinführöffnung 6 etwa symmetrische Keile 7, 8 vorgesehen, die so angeordnet sind, dass die Ausnehmungen 3c, 3b eines in die Führungsbahn 5 eingesetzten Magazins 3 darübergleiten. Sie dienen dazu, dass die Dias 2 von ihrer Lage auf den Bodenleisten 3a allmählich beim Transport des Magazins 3 in die Höhe der Einführöffnung 6 angehoben werden und nach ihrer Vorführung wieder auf die Bodenleisten 3a herabsinken.

Im oder unterhalb des Keiles 7 ist, der Zahnstange 3d zugewandt, ein Zahnrad 9 auf einer Welle angeordnet. Das Zahnrad 9 wird nach jedem Diawechsel entweder motorisch oder von Hand durch eine nicht gezeigte Schaltvorrichtung am Wechselschieber 4 um einen Zahn fortgeschaltet. Die Fortschaltung um einen Zahn entspricht dabei der Fortschaltung des Magazins 3 um ein Diafach. Zu beiden Seiten der Einführöffnung 6 sind Doppelkeile 10a, 10b vorgesehen, die dafür sorgen, dass beim Magazintransport die Dias 2 im Magazin 3 ausgerichtet und das jeweils zu projizierende Dia 2 auf die Einführöffnung 6 ausgerichtet wird.

Nun soll in dem Projektor 1 auch noch ein zweiter Magazintyp 11 verwendet werden können, bei dem der Abstand der Diafächer kleiner ist, weil beispielsweise die Fachwände entfallen. Mit dem Magazintyp 3 hat der Magazintyp 11 die drei Bodenleisten 11a und die Ausnehmungen 11b, 11c gemeinsam. Auch bei diesem Magazintyp 11 sind die Fächer zur Einführöffnung 6 hin offen. Auch stehen die Dias 2 oben über das Magazin 11 vor. Der Magazintyp 11 ist jedoch breiter, so dass er nicht in die Führung 5 eingeschoben werden kann. Seine Zahnstange 11d liegt näher an der Längsmittelebene des Magazins als beim Magazin 3 und er ist niedriger ausgebildet.

In bereits vorgeschlagener Weise ist am Projektor 1 koaxial zum Zahnrad 9 ein darüber liegendes Zahnrad 12 vorgesehen. Sein Durchmesser und seine Lage sind so bemessen, dass das Zahnrad 12 mit der Zahnstange 11d beim Einsetzen eines Magazins 11 in den Projektor 1 in Eingriff gelangt und bei Drehung um einen Zahn das Magazin 11 um ein Diafach weiter transportiert. Um eine einfache Fortschaltungsvorrichtung zu erhalten, sind Zahnstangen 3d, 11d und Zahnräder 9, 12 so ausgelegt, dass die Zahnräder 9, 12 die gleiche Zähnezahl haben. Eine weitere Besonderheit des Magazintyps 11 besteht in bereits vorgeschlagener Weise darin, dass die Dias 2 in Nuten geführt sind und nicht im Magazin 11 angehoben, sondern nur seitlich aus- und eingeschoben werden können. Deshalb muss das Magazin 11 so in den Projektor eingesetzt werden, dass die Auflagefläche der Bodenleisten 11a unmittelbar über der höchsten Erhebung der Keile 7, 8 liegt. Auch deshalb ist es wichtig, dass der zweite Magazintyp 11 nicht in die Führungsbahn 5 für den Magazintyp 3 einsetzbar ist, damit keine Verwechslungen auftreten können und jeder der beiden Magazintypen 3, 11 beim Einsetzen automatisch mit dem ihm zugeordneten Zahnrad 9 bzw. 12 in Eingriff kommt.

Hierzu ist oberhalb der Magazinbahn 5 für den Magazintyp 3 an beiden Längsseiten eine Stufe 13 vorgesehen, durch die der Magazinschacht so erweitert wird, dass ein Magazin 11 auf die Stufen 13 aufgesetzt werden kann. Die Höhe der Stufen 13 ist so bemessen, dass die Diaunterkanten der im Magazin 11 befindlichen Dias 2 gerade über den Keilen 7, 8 liegen, also ohne Anhebung über die Keile 7, 8 und quer dazu in die Einführöffnung 6 mittels des Wechselschiebers 4 bewegt werden können. Die Zahnstange 11d reicht bis in den Raum zwischen der Schachtwand und dem Keil 7, so dass sie mit dem Zahnrad 12 in Eingriff gelangen kann.

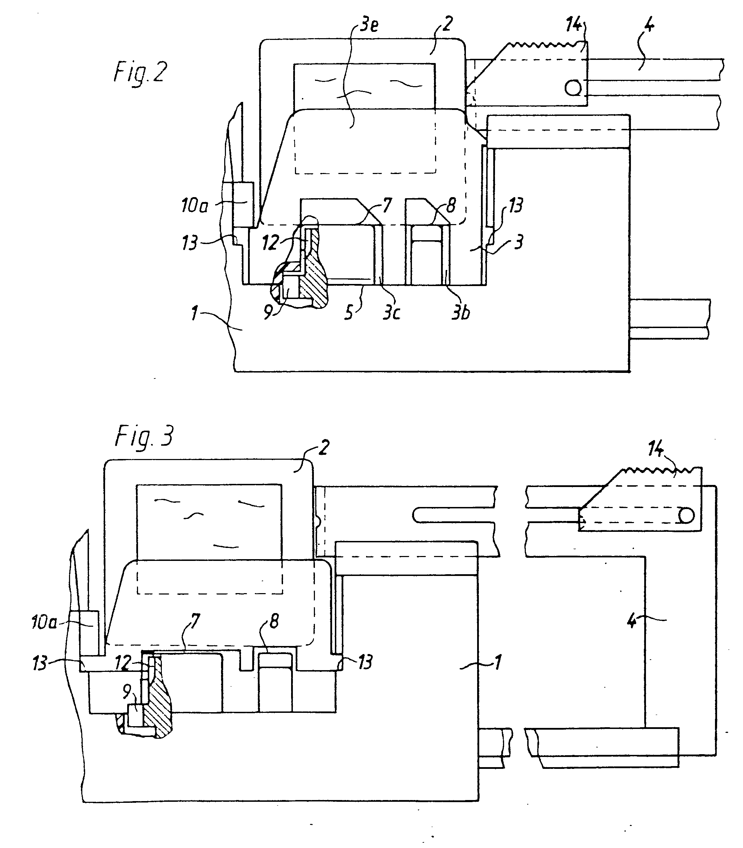

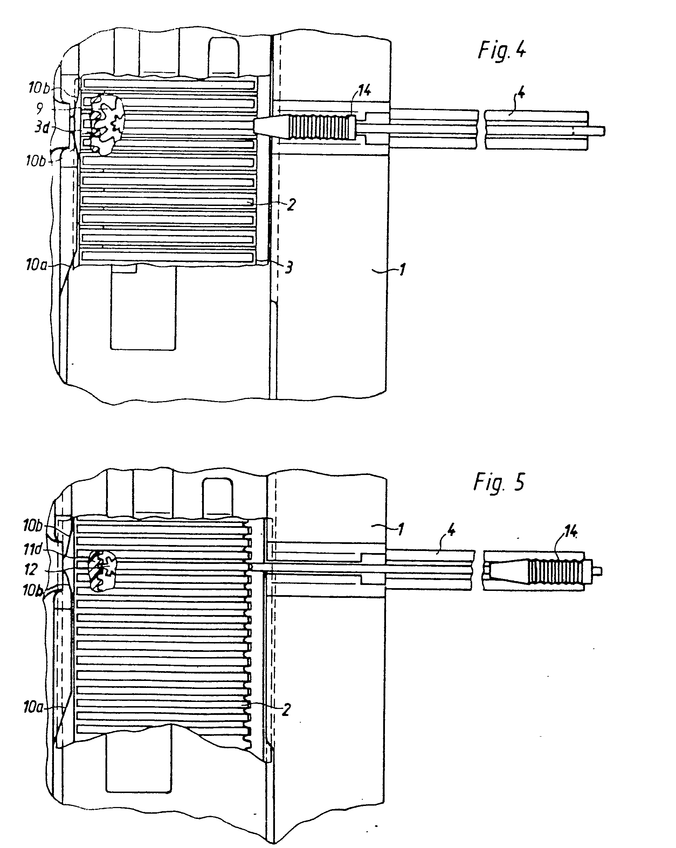

Die Führungsbahn 5 und die Stufen 13 sind hinter und vor der Einführungsöffnung 6 nach oben hin offen, so dass beide Magazintypen 3, 11 sowohl von hinten in den Schacht eingeführt und nach vorn aus dem Schacht herausgezogen als auch von oben eingesetzt und entnommen werden können. Die Keile 10a, 10b liegen dabei so weit über der Stufe 13, dass unmittelbar neben der Einführungsöffnung 6 zwischen der Stufe 13 und den Keilen 10a, 10b eine kurze Führungsnut für das Magazin 11 gebildet wird. Auch bei Verwendung des Magazintyps 11 dienen diese Keile 10a, 10b zum Ausrichten der Dias 2 im Magazin 11. Nachdem die Dias 2 im Magazintyp 11 enger beisammen angeordnet sind oder auch dünner sein können, muss der Wechselschieber 4 eine Breite haben, die so gering ist, dass er zwischen den eng beisammen liegenden Dias durchfahren und das jeweils zu projizierende, ggf. dünne Dia in das Projektionsfenster des Projektors 1 schieben kann. Ein derartig schmaler Schieber 4 ist aber u.U. nicht geeignet, dickere Dias im Magazin 3 ordnungsgemäss zu erfassen und zu transportieren. Aus diesem Grund ist auf den Wechselschieber 4 ein längs eines Schlitzes 4a verschiebbarer Reiter 14 aufgesetzt, der an seiner der Einführöffnung 6 zugewandten Seite 2 Rastnocken 14a aufweist. Dieser Reiter 14 ist so breit, dass er zwischen die Dias 2 im Magazin 3 einfahren und auch dickere Dias 2 erfassen kann. Bei Verwendung des Magazintyps 3 wird der Reiter 14 an das der Einführöffnung 6 zugewandte Ende des Wechselschiebers 4 in dem Schlitz 4a verschoben, so dass seine Rastnocken 14a an der Stirnseite des Schiebers 4 verrasten, vgl. Fig. 6. Sollen jedoch Magazine vom Magazintyp 11 verwendet werden, so wird der Reiter an das der Einführöffnung 6 abgewandte Ende des Wechselschiebers 4 verschoben, so dass er bei Betätigung des Wechselschiebers 4 nicht mehr auf ein Magazin 11 trifft, vgl. hierzu die Fig. 3 und 5.

## Patentansprüche

1. Diaprojektor für in Magazinen angeordnete, gerahmte Diapositive mit einem motorischen oder von Hand betätigbaren Diawechselschieber, mit einer Diaeinführöffnung und mit einer Vorrichtung zum schrittweisen Weitertransport eines eingesetzten Diamagazins nach der Zurückführung eines projizierten Dias in das Magazin und mit einer in einem oben offenen Schacht angeordneten Magazinführungsbahn für einen ersten Magazintyp und einem Keil in dieser Magazinführungsbahn zum Anheben der in Magazinen dieses Typs angeordneten Diapositive auf die Höhe der Vorführebene des Projektors und Absenkung derselben auf die Magazinbodenleisten nach der Vorführung und mit Mitteln zur Verwendung eines zweiten Magazintyps, in dem die Diapositive in geringeren Abständen voneinander angeordnet sind als im ersten Magazintyp, dadurch gekennzeichnet, dass zur Verwendung von eine grössere Basisbreite aufweisenden Magazinen (11) des zweiten Typs die Führungsbahn (5) entlang beider Längsseiten je eine Stufe (13) aufweist, so dass über der Führungsbahn (5) für den ersten Magazintyp (3) eine zweite, der Breite der Magazine (11) des zweiten Typs entsprechende, breitere Führungsbahn zum Aufsetzen der Magazine (11) des zweiten Typs vorhanden ist.

2. Diaprojektor nach Anspruch 1, dadurch gekennzeichnet, dass die Magazinführungsbahnen an ihren beiden Enden und/oder beiderseits der Einführungsöffnung (6) nach oben hin offen sind.

3. Diaprojektor nach Anspruch 1 oder 2, dadurch gekennzeichnet, dass das beiderseits des Diawechselschiebers (4) bzw. der Einführöffnung (6) zum Bewegen der einzelnen Diapositive (2) in die Vorführebene Doppelkeile (10a, 10b) zum Ausrichten der Dias (2) in dem jeweils eingesetzten Magazin (3, 11) vorgesehen sind.

4. Diaprojektor nach einem der vorhergehenden Ansprüche, dadurch gekennzeichnet, dass der Abstand der Stufen (13) vom Boden der Magazinführungsbahn (5) so gross ist, dass die Unterkanten der in einem Magazin (11) des zweiten Typs angeordneten Diapositive (2) bei eingesetztem Magazin (11) oberhalb des Keils (7) zum Anheben der in den Magazinen (3) des ersten Typs angeordneten Diapositive (2) liegen.

5. Diaprojektor nach einem der vorhergehenden Ansprüche, dadurch gekennzeichnet, dass die Vorrichtung zum schrittweisen Transport der unterschiedlichen Diamagazine (3, 11) durch in einer Ausnehmung des Keiles (7) um die Höhe der Stufen (13) höhenmässig versetzte Zahnräder (9, 12) gleicher Zähnezahl aber unterschiedlichen Durchmessers gebildet wird.

6. Diamagazin des zweiten Typs für einen Projektor nach Anspruch 5, dadurch gekennzeichnet, dass zwischen Bodenleisten (11a) des Magazins (11) Ausnehmungen (11b, 11c) vorgesehen sind, deren Höhe etwa der Dicke der Bodenleisten (11a) entspricht, so dass der Keil (7) beim Magazintransport in eine der Ausnehmungen (11c) eingreifen kann, ohne die Unterkanten der Dias (2) anzuheben, und dass an einer Bodenleiste längs dieser Ausnehmung (11c) eine Zahnstange (11d) vorgesehen ist, die mit dem höher gelegenen Zahnrad (12) in Eingriff bringbar ist.

**Claims:**

1. A slide projector for framed slides arranged in magazines comprising a motorized or manually actuable slide-changer with a slide-insertion opening and a device for intermittent (stepwise) transport of an inserted slide magazine after the return of a projected slide to the magazine and a magazine guide track arranged in an open-top well for magazines of a first type and a wedge in said magazine guide track for lifting the slides contained in magazines of this type to the level of the projector plane and lowering them to the magazine base strips after projection, and means for the application of magazines of a second type wherein the slides are spaced more closely than in magazines of the first type, characterised in that, for adaptation to magazines (11) of the second type having a greater base width, the magazine guide track (5) comprises a step (13) along each longitudinal side so that above the guide track (5) for the first magazine type (3) there is a second, broader guide track corresponding to the width of magazines (11) of the second type to support such second type magazines (11).

2. A slide projector according to claim 1, characterised in that the magazine guide tracks are open towards the top at both ends thereof and/or on both sides of the slide-insertion opening. (6).

3. A slide projector according to claim 1 or 2, characterised in that double wedges (10a, 10b) are provided on both sides of the slide changer (4) or of the slide insertion opening (6) for moving the individual slides (2) into the projection plane and lining the slides (2) up in the given magazine (3, 11).

4. A slide projector according to any preceding claim, characterised in that the distance between the steps (13) and the bottom of the magazine-guide track (5) is such that the lower edges of slides (2) contained in a magazine (11) of the second type, when said magazine (11) is inserted, extend above the lifting wedge (7) for slides (2) contained in magazines (3) of the first type.

5. A slide projector according to any preceding claim characterised in that the intermittent transportation means for slide magazines (3, 11) of different types are gear wheels (9, 12) having the same number of teeth but relatively different diameters, which are vertically staggered in a recess of the wedge (7) by the height of the steps (13).

6. A slide magazine of the second type for use in a projector according to claim 5, characterised by the provision between base bars (11a) of the magazine (11) of cut-outs or recesses (11b, 11c) the height of which corresponds approximately to the thickness of the base bars (11a) so that during magazine transport the wedge (7) can engage in one of the recesses (11c) without lifting the bottom edges of the slides (2), and by the provision on one base bar alongside of said recess (11c) of a rack bar (11d) which is adapted to be engaged with the higher-positioned gear wheel (12).

**Revendications**

1. Projecteur pour des diapositives encadrées, disposées dans des magasins, et comportant un dispositif passe-vues pouvant être actionné par un moteur ou à la main, une ouverture d'introduction des diapositives et un dispositif pour faire avancer pas-à-pas un magasin pour diapositives, introduit après le retour d'une diapositive projetée dans les magasins, une glissière de guidage des magasins, disposée dans un couloir ouvert à sa partie supérieure et prévue pour un premier type de magasins et un coin situé dans cette glissière de guidage des magasins et permettant de soulever les diapositives disposées dans des magasins de ce type, pour l'amener au niveau du plan de projection du projecteur et permettant d'abaisser les diapositives au niveau des barrettes inférieures du magasin après la projection, et comportant des dispositifs permettant d'utiliser un second type de magasins, et dans lequel les diapositives sont disposées à des distances réciproques plus faibles que dans le premier type de magasin, caractérisé par le fait que pour l'utilisation de magasins (11) du second type, possédant und largeur de base plus importante, la glissière (5) de guidage des magasins comporte un épaulement (13) le long de ses deux côtés longitudinaux, de sorte qu'il existe, au-dessus de la glissière (5) de guidage pour le premier type de magasins (3), une seconde glissière de guidage plus large, correspondant à la largeur des magasins (11) du second type et permettant la mise en place de ces derniers.

2. Projecteur de diapositives selon la revendication 1, caractérisé par le fait que les glissières de guidage des magasins sont ouvertes vers le haut à leurs deux extrémités et/ou des deux côtés de l'ouverture d'introduction. (6).

3. Projecteur de diapositives selon la revendication 1 ou 2, caractérisé par le fait que des deux côtés du dispositif passe-vues (4) et de l'ouverture d'introduction (6) il est prévu, pour le déplacement des diapositives individuelles (2) dans le plan de projection, des coins doubles (10a, 10b) permettant d'aligner les diapositives (2) dans le magasin concerné (3, 11).

4. Projecteur de diapositives selon l'une des revendications précédentes, caractérisé par le fait que la distance entre les épaulements (13) et le fond de la glissière (5) de guidage du magasin est telle que les bords inférieurs des diapositives (2), disposées dans un magasin (11) du second type, sont situés, lorsqu'un magasin (11) est mis en place, au-dessus du coin (7) destiné à soulever les diapositives (2) disposées dans les magasins (3) du premier type.

5. Projecteur de diapositives selon l'une des revendications précédentes, caractérisé par le fait que le dispositif permettant de déplacer pas-à-pas les différents magasins pour diapositives (3, 11) est formé par des pignons (9, 12) possédant des nombres identiques de dents, mais des diamètres différents, décalés en hauteur d'une valeur égale à la hauteur des épaulements (13), dans une partie évidée du coin (7).

6. Magasin pour diapositives du second type pour un projecteur selon la revendication 5, caractérisé par le fait qu'entre des barrettes inférieures (11a) du magasin (11) se trouvent prévues des parties évidées (11b, 11c) dont la hauteur correspond approximativement à l'épaisseur des barrettes inférieures (11a) de sorte que le coin (7) peut s'engager, lors du transport du magasin, dans l'une des parties évidées (11c), sans soulever les bords inférieurs des diapositives (2), et qu'il est prévu sur une barrette inférieure de long de cette partie évidée (11c), une crémaillère (11d) qui peut être amenée en prise avec le pignon (12) situé dans la position la plus haute.

Fig. 1

Fig.2

Fig.3

Fig. 4

Fig. 5